# EUROPEAN PATENT SPECIFICATION

(11) **EP 3 671 995 B1**
(45) Date of publication and mention of the grant of the patent: **11.05.2022**
(21) Application number: 18215584.6
(22) Date of filing: 21.12.2018
(51) Int. Cl.: H02B 13/035, H01R 13/53, H01R 31/06

(54) **CONNECTION APPARATUS FOR A CIRCUIT BREAKER OF A MEDIUM VOLTAGE SWITCHGEAR**
VERBINDUNGSVORRICHTUNG FÜR EINEN LEISTUNGSSCHALTER EINER MITTELSPANNUNGSSCHALTANLAGE
APPAREIL DE CONNEXION POUR UN DISJONCTEUR D'UN APPAREILLAGE DE COMMUTATION MOYENNE TENSION

(43) Date of publication of application: 24.06.2020
(73) Proprietor: ABB Schweiz AG, 5400 Baden (CH)
(72) Inventor: Gentsch, Dietmar, 40882 Ratingen (DE); Reuber, Christian, 47877 Willich (DE)
(74) Representative: Maiwald Patent- und Rechtsanwaltsgesellschaft mbH

(56) References cited:
- DE-A1- 19 809 839
- DE-A1- 19 852 410
- JP-B2- 3 409 484
- US-B1- 6 242 708

## Description

### FIELD OF THE INVENTION

The present invention relates to a connection apparatus for circuit breaker of a medium voltage switchgear, to circuit breaker apparatus for a medium voltage switchgear, and to a cable connection box for a circuit breaker of a medium voltage switchgear.

### BACKGROUND OF THE INVENTION

JP3409484B2 describes that a horizontal reinforcing plate is fixed to the side wall of a cylindrical container. fittings are welded to the upper surface of a fitting plate and right and left mid-phase cable sockets are positioned in spaces formed on the right and left sides of the fittings, and he lower and upper end sections of insulating connecting rods are respectively connected and fixed to the fittings and reinforcing plate through connecting metallic parts. It is described that such a case does not occur that the fitting plate is bent and connecting conductors, etc., in the container cannot maintain prescribed insulating distances, and that consequently, a gas-insulated switchgear can have a sufficiently strong strength and, at the same time, the switchgear can be worked easily.

DE19809839A1 relates to metal-enclosed, gas-insulated switchgears, especially medium voltage switchgears, with three-position disconnectors and power breakers, especially vacuum power breakers, arranged together in containers filled with gas. It is described that the containers have ducts for connecting the three-position disconnectors to the busbars of the switchgear which are arranged outside the container and ducts for connecting the power breakers to the cable terminals of the switchgears which are arranged outside the container. It is described that the switchgears are embodied as modular structured switch panels having hermetically sealed first switching chambers accommodating the three-position disconnectors and the busbars and hermetically sealed second chambers accommodating the power breakers, and that the first and second switching chambers are interconnected by modular connector devices and have gas-tight cable ducts.

DE19852410A1 describes that the switching system has a wall lead through from the interior of the switching system to an output cable for connection to a cable with a certain shape of connecting head, and that an isolating adapter used for connecting another design of connecting cable can be connected to one side of the wall lead through, so that the connecting cable can be coupled to the other side.

US6242708B1 describes a modular three position vacuum isolator switch that is operable to connect a stationary contact to either of two moveable contacts or an intermediate position which is out of electrical engagement with either of the moveable contacts. It is described that one of the moveable contacts is grounded and the other is connected a power source, and that the stationary contact is connected to two electrical connectors, and that one of the two electrical connectors is connected to a breaker and the second is connected to a corresponding input on a second similar isolator switch model, which itself is connected to a second line source. It is described that the stationary contact is connected to the circuit interrupter for connecting the circuit interrupter to either of the two line sources, to ground, or to isolate the circuit interrupter by placing the isolator switch module in the intermediate position.

Medium voltage (MV) switchgear panels usually provide a cable compartment where several cables for each phase are connected in parallel. As a MV cable requires an electrical termination, a certain distance between these cables must be respected. The parallel cables are arranged in one line.

Due to the arrangement in one line, the total length of a parallel cable fixation can become considerable long and it can become a constraint for the general design of the switchgear.

There is a need to provide for improved cable connection means for a medium voltage switchgear.

### SUMMARY OF THE INVENTION

Therefore, it would be advantageous to have improved cable connection means for a medium voltage circuit breaker.

The object of the present invention is solved with the subject matter of the independent claim, wherein further embodiments are incorporated in the dependent claims.

In a first aspect, there is provided a connection apparatus and a circuit breaker compartment for circuit breaker of a medium voltage switchgear as defined in appended claim 1.

In a second aspect, there is provided a circuit breaker apparatus for a medium voltage switchgear as defined in appended claim 12.

In an example of the application, there is provided a connection apparatus and a circuit breaker compartment for circuit breaker of a medium voltage switchgear. The connection apparatus comprises an electrical link, and a cable connection box for a phase of the medium voltage switchgear The electrical link is configured to connect to the circuit breaker compartment of a medium voltage switchgear. The cable connection box is configured to connect to the electrical link. The cable connection box comprises three or more cable connection sockets in a zig zag arrangement. The electrical link and the cable connection box are configured such that when the electrical link is connected to the circuit breaker compartment and the cable connection box is connected to the electrical link, a rear wall of the cable connection box faces a wall of the circuit breaker compartment and the two or more cable connection sockets face away from the wall of the circuit breaker compartment.

In an example, the electrical link is configured such that when the electrical link is connected to the circuit breaker compartment a section of the electrical link has a longitudinal axis that lies in a plane parallel to the wall of the circuit breaker compartment.

In other words, the electrical link can extend away from a wall of a circuit breaker compartment, for example perpendicularly, then go through a 90 degree bend, such that the part that connects to a cable connection box is now orientated in a direction parallel to the wall of the circuit breaker compartment.

In an example, the cable connection box has a centre axis parallel to the rear wall of the cable connection box. Centres of consecutive cable connection sockets lie on either side of the centre axis of the cable connection box.

In other words, the connection sockets zig zag either side of a centre line that can be defined as the line centred between the zig zagging sockets. To put this another way, when the cable connection box is connected to the electrical link that itself is connected to the circuit breaker compartment, the cable connection sockets face away from the wall of the circuit breaker box. As you move away from the connection point between the electrical link and the cable connection box, the first cable connection socket is positioned on one side of a centre axis, the second is positioned on the other side of the centre axis, with the third being positioned on the same side of the centre axis as the first cable connection socket, and this arrangement continues for other sockets when present. Thus, the cable connection sockets are positioned or lie in a zig zag arrangement either side of a centre axis of the cable connection box that is parallel to a rear wall of the cable connection box.

In an example, the electrical link and the cable connection box are configured such that when the electrical link is connected to the circuit breaker compartment and the cable connection box is connected to the electrical link, the longitudinal axis of the electrical link is parallel to the centre axis of the cable connection box.

In an example, the centre axis of the cable connection box lies in the plane parallel to the wall of the circuit breaker compartment offset to one side of the longitudinal axis of the electrical link.

In an example, the longitudinal axis of the electrical link and the centre axis of the cable connection box share the same axis.

In an example, the electrical link and the cable connection box are configured such that when the electrical link is connected to the circuit breaker compartment and the cable connection box is connected to the electrical link, the longitudinal axis of the electrical link is at an angle to the centre axis of the cable connection box.

In an example, the cable connection box comprises a busbar configured to connect to the two or more cable connection sockets. When the busbar is connected to the three or more cable connection sockets two sides of the busbar are parallel to the centre axis of the cable connection box.

In an example, the cable connection box comprises a busbar configured to connect to the three or more cable connection sockets. When the busbar is connected to the three or more cable connection sockets two sides of the busbar are substantially parallel to one another and follow the zig zag arrangement of the cable connection sockets.

According to the invention, a cable connection socket of the three or more cable connection sockets that is adjacent to the electrical link when the cable connection box is connected to the electrical link has a lateral hole. The cable connection box is configured to be connected to the electrical link via a screw extending through the lateral hole.

In an example, the lateral hole is formed from a locking ring with a male left hand thread at its outer surface that matches a female left hand thread of a tube-shaped extension of the cable connection box.

In an example, the cable connection box comprises four or more cable connection sockets in a zig zag arrangement.

In a second aspect, there is provided a circuit breaker apparatus for a medium voltage switchgear. The circuit breaker apparatus comprises a circuit breaker compartment, three electrical links, and three cable connection boxes. Each electrical link is connected to the circuit breaker compartment. Each cable connection box is connected to a respective electrical link. Each cable connection box comprises three or more cable connection sockets in a zig zag arrangement. A rear wall of each cable connection box faces a wall of the circuit breaker compartment and the two or more cable connection sockets of each cable connection box face away from the wall of the circuit breaker compartment.

In an example, a section of each electrical link has a longitudinal axis that lies in a plane parallel to the wall of the circuit breaker compartment. The longitudinal axes of the plurality of electrical links are parallel to one another.

In an example, each cable connection box has a centre axis parallel to the rear wall of the cable connection box. Centres of consecutive cable connection sockets lie on either side of the centre axis of the cable connection box. The centre axes of the plurality of cable connection boxes are parallel to one another.

In an example, the longitudinal axis of each electrical link is parallel to the centre axis of the cable connection box to which it is connected.

In an example, the centre axis of each cable connection box lies in the plane parallel to the wall of the circuit breaker compartment. The longitudinal axis of each electrical link is offset to a same side of the centre axis of each cable connection box to which it is attached.

In an example, the wall of the circuit breaker compartment has a first edge parallel to a second edge. The longitudinal axes of the plurality of electrical links are parallel to the first edge and second edge.

In an example, a distance between the first edge and the longitudinal axis of an electrical link adjacent to the first edge is greater than a distance between the second edge and the longitudinal axis of an electrical link adjacent to the second edge.

In an example, the longitudinal axis of each electrical link and the centre axis of the corresponding cable connection box to which the electrical link is connected share the same axis.

In an example, the longitudinal axis of each electrical link is at an angle to the centre axis of the cable connection box to which it is connected.

In an example, the centre axis of each cable connection box lies in the plane parallel to the wall of the circuit breaker compartment. The longitudinal axis of each electrical link is angled in the same direction referred to the centre axis of each cable connection box to which it is attached.

In an example, the wall of the circuit breaker compartment has a first edge parallel to a second edge. The centre axes of the plurality of cable connection boxes are parallel to the first edge and second edge.

In an example, a distance between the first edge and the centre axis of a cable connection box adjacent to the first edge is equal to a distance between the second edge and the centre axis of a cable connection box adjacent to the second edge.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows parts of a medium voltage switchgear as described herein;
Fig. 2 shows a comparison between parts of an existing medium voltage switchgear and parts of a medium voltage switchgear as described herein;
Fig. 3 shows parts of a medium voltage switchgear as described herein;
Fig. 4 shows parts of a medium voltage switchgear as described herein
Fig. 5 shows different busbars; and
Fig. 6 shows connection means of a cable connection box for connection to an electrical link.

### DETAILED DESCRIPTION OF EMBODIMENTS

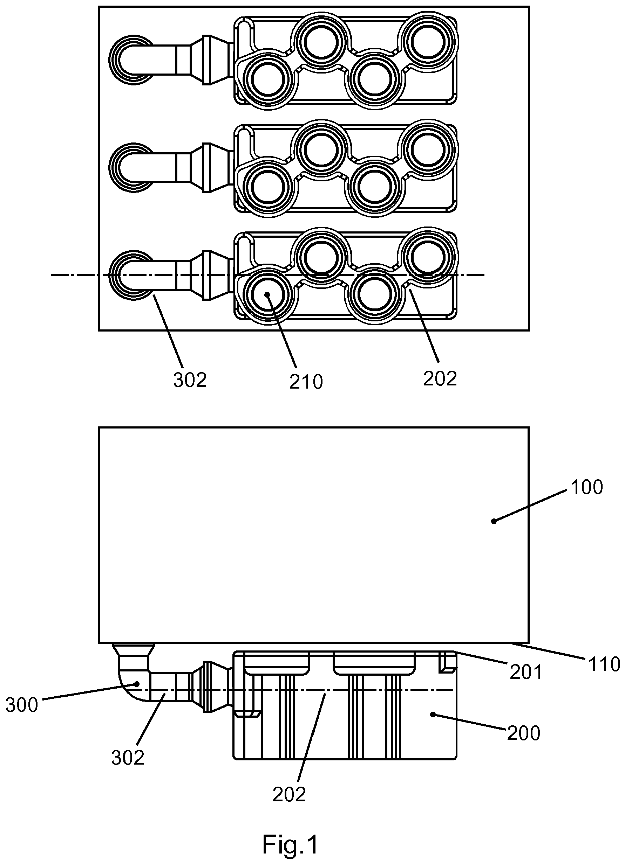

Figs. 1-9 show examples of connection apparatus for circuit breaker of a medium voltage switchgear, along with examples of a circuit breaker apparatus for a medium voltage switchgear such as GIS, and examples of a cable connection box for a circuit breaker of a medium voltage switchgear.

These figures show a connection apparatus for a circuit breaker of a medium voltage switchgear. The connection apparatus comprises an electrical link 300, 320, and a cable connection box 200, 240. The electrical link is configured to connect to a circuit breaker compartment 100 of a medium voltage switchgear. The cable connection box is configured to connect to the electrical link. The cable connection box comprises three or more cable connection sockets 210 in a zig zag arrangement. The electrical link and the cable connection box are configured such that when the electrical link is connected to the circuit breaker compartment and the cable connection box is connected to the electrical link, a rear wall 201, 241 of the cable connection box faces a wall 110 of the circuit breaker compartment and the two or more cable connection sockets face away from the wall of the circuit breaker compartment.

According to an example, the electrical link 300, 320 is configured such that when the electrical link is connected to the circuit breaker compartment 100 a section of the electrical link has a longitudinal axis 302, 322 that lies in a plane parallel to the wall 110 of the circuit breaker compartment.

According to an example, the cable connection box 200, 240 has a centre axis 202, 242 parallel to the rear wall 201, 241 of the cable connection box. Centres of consecutive cable connection sockets 210 lie on either side of the centre axis of the cable connection box.

According to an example, the electrical link 300 and the cable connection box 200, 240 are configured such that when the electrical link is connected to the circuit breaker compartment and the cable connection box is connected to the electrical link, the longitudinal axis 302 of the electrical link is parallel to the centre axis 202, 242 of the cable connection box.

According to an example, the centre axis 242 of the cable connection box 240 lies in the plane parallel to the wall 110 of the circuit breaker compartment offset to one side of the longitudinal axis 302 of the electrical link 300.

According to an example, the longitudinal axis 302 of the electrical link 300 and the centre axis 202 of the cable connection box 200 share the same axis.

According to an example, the electrical link 320 and the cable connection box 240 are configured such that when the electrical link is connected to the circuit breaker compartment and the cable connection box is connected to the electrical link, the longitudinal axis 322 of the electrical link is at an angle to the centre axis 242 of the cable connection box.

According to an example, the cable connection box comprises a busbar 205 configured to connect to the three or more cable connection sockets 210. When the busbar is connected to the three or more cable connection sockets two sides of the busbar are parallel to the centre axis 202 of the cable connection box 200.

According to an example, the cable connection box 240 comprises a busbar 245 configured to connect to the three or more cable connection sockets 210. When the busbar is connected to the three or more cable connection sockets, two sides of the busbar are substantially parallel to one another and follow the zig zag arrangement of the cable connection sockets.

According to the invention, a cable connection socket of the three or more cable connection sockets 210 that is adjacent to the electrical link 300, 320 when the cable connection box 200, 240 is connected to the electrical link has a lateral hole. The cable connection box is configured to be connected to the electrical link via a screw 280 extending through the lateral hole.

According to an example, the lateral hole is formed from a locking ring 270 with a male left hand thread 278 at its outer surface that matches a female left hand thread 268 of a tube-shaped extension 260 of the cable connection box 200, 240.

According to an example, the cable connection box 200, 240 comprises four or more cable connection sockets 210 in a zig zag arrangement.

The figures also show a circuit breaker apparatus for a medium voltage switchgear.

The circuit breaker apparatus comprises a circuit breaker compartment 100, a plurality of electrical links 300, 320, and a plurality of cable connection boxes 200, 240. Each electrical link is connected to the circuit breaker compartment 100. Each cable connection box is connected to a respective electrical link. Each cable connection box comprises two or more cable connection sockets 210 in a zig zag arrangement. A rear wall 201, 241 of each cable connection box faces a wall 110 of the circuit breaker compartment and the three or more cable connection sockets of each cable connection box face away from the wall of the circuit breaker compartment.

According to an example, a section of each electrical link 300, 320 has a longitudinal axis 302, 322 that lies in a plane parallel to the wall 110 of the circuit breaker compartment, and wherein the longitudinal axes of the plurality of electrical links are parallel to one another.

According to an example, each cable connection box 200, 240 has a centre axis 202, 242 parallel to the rear wall 201, 241 of the cable connection box. Centres of consecutive cable connection sockets 210 lie on either side of the centre axis of the cable connection box, and wherein the centre axes of the plurality of cable connection boxes are parallel to one another.

According to an example, the longitudinal axis 302 of each electrical link 300 is parallel to the centre axis 202, 242 of the cable connection box 200, 240 to which it is connected.

According to an example, the centre axis 242 of each cable connection box 240 lies in the plane parallel to the wall 110 of the circuit breaker compartment. The longitudinal axis 302 of each electrical link 300 is offset to a same side of the centre axis of each cable connection box to which it is attached.

According to an example, the wall 110 of the circuit breaker compartment has a first edge 111 parallel to a second edge 112. The longitudinal axes 302 of the plurality of electrical links 300 are parallel to the first edge and second edge.

According to an example, a distance between the first edge 111 and the longitudinal axis 302 of an electrical link 300 adjacent to the first edge is greater than a distance between the second edge 112 and the longitudinal axis 302 of an electrical link 300 adjacent to the second edge.

In an example, a distance between the first edge and the centre axis 202, 242 of a cable connection box 200, 240 adjacent to the first edge 111 is equal to a distance between the second edge 112 and the centre axis 202, 242 of a cable connection box 200, 240 adjacent to the second edge.

According to an example, the longitudinal axis 302 of each electrical link 300 and the centre axis 202 of the corresponding cable connection box 200 to which the electrical link is connected share the same axis.

In an example, the wall 110 of the circuit breaker compartment has a first edge 111 parallel to a second edge 112. The longitudinal axes 302 of the plurality of electrical links 300 are parallel to the first edge and second edge. A distance between the first edge and the longitudinal axis of an electrical link 300 adjacent to the first edge is equal to a distance between the second edge and the longitudinal axis of an electrical link 300 adjacent to the second edge.

According to an example, the longitudinal axis 322 of each electrical link 320 is at an angle to the centre axis 242 of the cable connection box 240 to which it is connected.

According to an example, the centre axis 202, 242 of each cable connection box 200, 240 lies in the plane parallel to the wall 110 of the circuit breaker compartment. The longitudinal axis 322 of each electrical link 320 is angled in the same direction referred to the centre axis of each cable connection box to which it is attached.

According to an example, the wall 110 of the circuit breaker compartment has a first edge 111 parallel to a second edge 112, and wherein the centre axes 202, 242 of the plurality of cable connection boxes 200, 240 are parallel to the first edge and second edge.

According to an example, a distance between the first edge 111 and the centre axis 202, 242 of a cable connection box 200, 240 adjacent to the first edge is equal to a distance between the second edge 112 and the centre axis 202, 242 of a cable connection box 200, 240 adjacent to the second edge.

In an example, each of the cable connection boxes comprises four or more cable connection sockets 210 in a zig zag arrangement.

According to the invention, the circuit breaker apparatus comprises three electrical links 300, 320 and three cable connection boxes 200, 240.

In this way, an electrical link and associated cable connection box is provided for each phase of a three-phase system.

The figures also show a cable connection box 200, 240 for a circuit breaker of a medium voltage switchgear. The cable connection box comprises three or more cable connection sockets 210 in a zig zag arrangement. The cable connection box is configured to connect to an electrical link 300, 320 that is connected to a circuit breaker compartment 100 of a medium voltage switchgear.

In an example, the cable connection box 200, 240 has a centre axis 202, 242 parallel to the rear wall 201, 241 of the cable connection box. Centres of consecutive cable connection sockets 210 lie on either side of the centre axis of the cable connection box.

In an example, the cable connection box comprises a busbar 205 configured to connect to the three or more cable connection sockets 210. When the busbar is connected to the three or more cable connection sockets two sides of the busbar are parallel to the centre axis of the cable connection box 200.

In an example, the cable connection box comprises a busbar 245 configured to connect to the three or more cable connection sockets 210. When the busbar is connected to the three or more cable connection sockets two sides of the busbar are substantially parallel to one another and follow the zig zag arrangement of the cable connection sockets.

According to the invention, a cable connection socket of the three or more cable connection sockets 210 that is adjacent to the electrical link 300, 320 when the cable connection box 200, 240 is connected to the electrical link has a lateral hole. The cable connection box is configured to be connected to the electrical link via a screw 280 extending through the lateral hole.

In an example, the lateral hole is formed from a locking ring 270 with a male left hand thread 278 at its outer surface that matches a female left hand thread 268 of tube-shaped extension 260 of the cable connection box 200, 240.

In an example, the cable connection box comprises four or more cable connection sockets 210 in a zig zag arrangement.

Thus, parallel cables of a phase of a MV switchgear are in a zig zag-line for space saving.

Continuing with the figures, figure 1 shows a part of a medium voltage switchgear in the form of a Gas insulated Switchgear (GIS) as an example. A circuit breaker CB compartment 100 is shown, along with a solid insulated cable connection box 200. The cable connection box 200 comprises a rear wall 201 facing towards a wall 110 of the CB compartment 100. The cable connection box 200 further comprises a centre axis 202. An electrical link 300 with a longitudinal axis 302 is located between the CB compartment 100 and the cable connection box 200. The lower part of the figure is a view from the side; the upper part is a bottom view. There, it can be seen how the four cable connection sockets 210 are arranged in a zig zag line on either side of the centre axis 202. The cable connection boxes in these examples comprise busbar and sockets as internal conductors that are surrounded by an insulating material, for example epoxy, that is covered by a conductive, earthed layer, for example made from electric paint or from metal layer spraying.

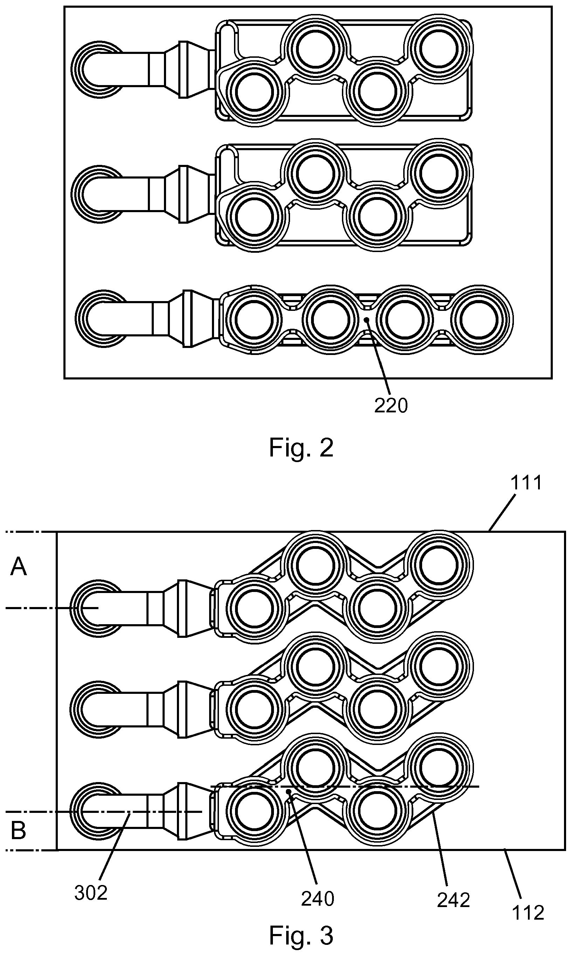

Figure 2 shows for comparison the same GIS where one phase is equipped with a cable connection box 220 with four sockets in a line. The sockets have the same distance from each other. It is evident how the zig zag arrangement saves space in a first direction from the left to the right in figure 2. This space can for example be used for the assembly of current transformers CTs or voltage transformers VTs. In a second direction, from the top to the bottom in figure 2, more space is required. This space is available anyway in most cases, as the required distance between the cable sockets is generally less than the space between the phases.

Figure 3 shows an embodiment of a cable connection box 240 with a cente axis 242, where the individual sockets are staged in a way that space is available for the corresponding socket of the neighbouring phase. Due to the staging, the axes 242 and 302 are still parallel, but have an offset.Here, it can be advantageous to have an asymmetric arrangement of the phases, i.e. the distance from the lateral phases to the sidewalls of the compartment is different; A is not the same as B.

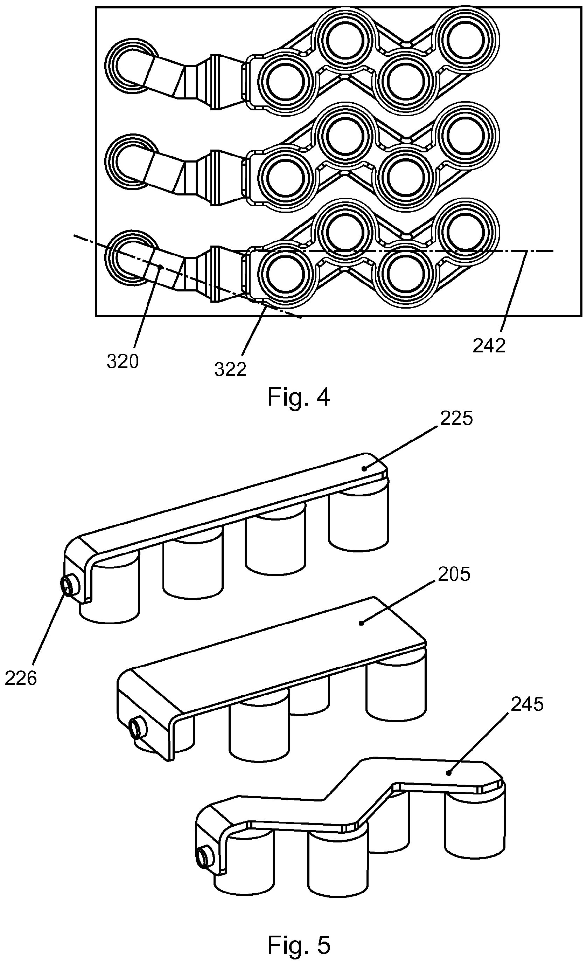

This asymmetric arrangement is not essential, and a symmetric arrangement can be advantageous for the further design of the switchgear panel in some situations, for example for the conductors inside of the CB compartment. Figure 4 shows that the staging of the cable connections can be combined with symmetric phase distances when for example the electrical links 320 include a corresponding offset and the axes 322 are not parallel to the axes 242.

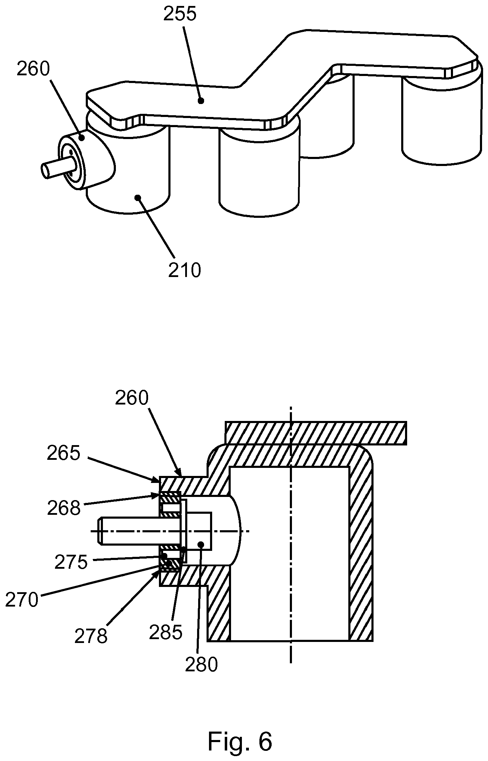

Figure 5 shows the different busbars that connect the parallel sockets. Busbar 225 represents the case when the sockets are in a line, and the busbar 225 has a certain thickness and a certain cross-section for carrying the current. Feature 226 represents a connection to the electrical link 300 or 320, which is described in more detail with respect to figure 6.

For the cable connection box 200, a busbar 205 is sufficient. The general shape of 205 is the same as the shape of the busbar 225. Busbar 205 has to be wider than busbar 225 to connect the zig zag sockets. However, as the total cross-section does not have to be increased, busbar 205 can be thinner than busbar 225.

For the cable connection box 240, a busbar 245 with a zig zag shape is provided. This shape is more complex regarding the manufacturing process, but it enables the space saving staging shown in the figures 3 and 4. Busbar 245 can be bended from a profile; alternatively, it can nowadays be laser-cut from a sheet.

Figure 6 shows more detail on connection 226 referred to above, relating to how to connect a cable connection box with an electrical link. The leftmost socket 210 provides a screw-connection to the left. This screw connection comprises a tube-shaped extension 260 from the socket to the left side. The front surface 265 can be firmly connected for example to an electrical link 300 by tightening the screw 280 using a standard wrench from inside of the socket 210.

The screw 280, with an optional washer or spring washer 285, rests on the locking ring 270. The locking ring provides a male left-hand thread 278 at its outer surface to match with the female left-hand thread 268. First, the locking ring 270 is screwed into the tube-shaped extension 260, using the feature 275 for turning the locking ring 270. Then the electrical link 300 is added at the left side and screw 280 is inserted and tightened. Due to the fact that the locking ring has a left-hand thread, it cannot become loose while screw 280 is tightened.

The leftmost surface of the locking ring 270 does not protrude at the leftmost end of the tube-shaped extension 260, as the electrical contact between the tube shaped extension 260 and the electrical link 300 has to be established by the front surface 265. The mechanical contact has to be established by the surface 265 and the screw 280. The socket 210 with the extension 260 can for example be manufactured by founding. The busbar 255 and the further sockets can also be founded in the same step of production.

### Reference Numerals

100 CB compartment
110 Wall of CB compartment
111 First edge of 110
112 Second edge of 110
200 Cable connection box with sockets in a zig zag-line
201 Rear wall of 200
202 Centre axis of 200
205 Busbar of cable connection 200
210 Socket
220 Cable connection box with sockets in line
225 Busbar of cable connection 220
226 Connection to the electrical link 300, 320
240 Cable connection box with sockets in a zig zag-line and with a zig zag-busbar
241 Rear wall of 240
242 Centre axis of 240
245 Busbar of cable connection 240
255 Busbar
260 Tube-shaped extension
265 Front surface of 260
268 Female left-hand thread
270 Locking ring
275 Feature for turning 270
278 Male left-hand thread
280 Screw
285 Spring washer
300 Electrical link
302 Longitudinal axis of 300
320 Electrical link for compensation of asymmetric phase distances
322 Longitudinal axis of 320

## Claims

1. A connection apparatus and a circuit breaker compartment for circuit breaker of a medium voltage switchgear, the connection apparatus comprising:
- an electrical link (300, 320) for a phase of the medium voltage switchgear; and
- a cable connection box (200, 240) for the phase of the medium voltage switchgear;
wherein, the electrical link is configured to connect to the circuit breaker compartment (100);
wherein, the cable connection box is configured to connect to the electrical link;
wherein, the cable connection box comprises three or more cable connection sockets (210) for the phase of the medium voltage switchgear in a zig zag arrangement;
wherein, the electrical link and the cable connection box are configured such that when the electrical link is connected to the circuit breaker compartment and the cable connection box is connected to the electrical link, a rear wall (201, 241) of the cable connection box faces a wall (110) of the circuit breaker compartment and the three or more cable connection sockets face away from the wall of the circuit breaker compartment; and
wherein a cable connection socket of the three or more cable connection sockets (210) that is adjacent to the electrical link (300, 320) when the cable connection box (200, 240) is connected to the electrical link has a lateral hole, and wherein the cable connection box is configured to be connected to the electrical link via a screw (280) extending through the lateral hole.

2. Connection apparatus and circuit breaker compartment according to claim 1, wherein the electrical link (300, 320) is configured such that when the electrical link is connected to the circuit breaker compartment (100) a section of the electrical link has a longitudinal axis that lies in a plane parallel to the wall of the circuit breaker compartment.

3. Connection apparatus and circuit breaker compartment according to any of claims 1-2, wherein the cable connection box (200, 240) has a centre axis parallel to the rear wall of the cable connection box, and wherein centres of consecutive cable connection sockets (210) lie on either side of the centre axis of the cable connection box.

4. Connection apparatus and circuit breaker compartment according to claim 3 when dependent upon claim 2, wherein the electrical link (300) and the cable connection box (200, 240) are configured such that when the electrical link is connected to the circuit breaker compartment and the cable connection box is connected to the electrical link, the longitudinal axis of the electrical link is parallel to the centre axis of the cable connection box.

5. Connection apparatus and circuit breaker compartment according to claim 4, wherein the centre axis of the cable connection box (240) lies in the plane parallel to the wall of the circuit breaker compartment offset to one side of the longitudinal axis of the electrical link (300).

6. Connection apparatus and circuit breaker compartment according to claim 4, wherein the longitudinal axis of the electrical link (300) and the centre axis of the cable connection box (240) share the same axis.

7. Connection apparatus and circuit breaker compartment according to claim 3 when dependent upon claim 2, wherein the electrical link (320) and the cable connection box (200, 240) are configured such that when the electrical link is connected to the circuit breaker compartment and the cable connection box is connected to the electrical link, the longitudinal axis of the electrical link is at an angle to the centre axis of the cable connection box.

8. Connection apparatus and circuit breaker compartment according to any of claims 3-7, wherein the cable connection box comprises a busbar (205) connected to the three or more cable connection sockets (210), and wherein two sides of the busbar are parallel to the centre axis of the cable connection box (200, 240).

9. Connection apparatus and circuit breaker compartment according to any of claims 3-7, wherein the cable connection box comprises a busbar (245) connected to the three or more cable connection sockets (210), and wherein two sides of the busbar are substantially parallel to one another and follow the zig zag arrangement of the cable connection sockets.

10. Connection apparatus and circuit breaker compartment according to claim 1, wherein the lateral hole is formed from a locking ring (270) with a male left hand thread (278) at its outer surface that matches a female left hand thread (268) of tube-shaped extension (260) of the cable connection socket (210).

11. Connection apparatus and circuit breaker compartment according to any of claims 1-10, wherein the cable connection box comprises four or more cable connection sockets (210) in a zig zag arrangement.

12. A circuit breaker apparatus for a medium voltage switchgear, the circuit breaker apparatus comprising:
- a circuit breaker compartment (100);
- three electrical links (300, 320) each for different phases of the medium voltage switchgear; and
- three cable connection boxes (200, 240) each for the different phases of the medium voltage switchgear;
wherein, each electrical link is connected to the circuit breaker compartment (100);
wherein, each cable connection box is connected to a respective electrical link;
wherein, each cable connection box comprises three or more cable connection sockets (210) each for the different phases of the medium voltage switchgear in a zig zag arrangement;
wherein, a rear wall of each cable connection box faces a wall of the circuit breaker compartment and the three or more cable connection sockets of each cable connection box face away from the wall of the circuit breaker compartment; and
wherein a cable connection socket of the three or more cable connection sockets (210) that is adjacent to the electrical link (300, 320) when the cable connection box (200, 240) is connected to the electrical link has a lateral hole, and wherein the cable connection box is configured to be connected to the electrical link via a screw (280) extending through the lateral hole.

13. Circuit breaker apparatus according to claim 12, wherein a section of each electrical link has a longitudinal axis that lies in a plane parallel to the wall of the circuit breaker compartment, and wherein the longitudinal axes of the three electrical links are parallel to one another

14. Circuit breaker apparatus according to claim any of claims 12-13, wherein each cable connection box (200. 240) has a centre axis parallel to the wall of the cable connection box, and wherein centres of consecutive cable connection sockets (210) lie on either side of the centre axis of the cable connection box, and wherein the centre axes of the three cable connection boxes are parallel to one another.

15. Circuit breaker apparatus according to claim 14 when dependent upon claim 13, wherein the longitudinal axis of each electrical link is parallel to the centre axis of the cable connection box to which it is connected.

16. Circuit breaker apparatus according to claim 15, wherein the centre axis of each cable connection box (240) lies in the plane parallel to the wall of the circuit breaker compartment, and wherein the longitudinal axis of each electrical link (300) is offset to a same side of the centre axis of each cable connection box to which it is attached.

17. Circuit breaker apparatus according to claim 16, wherein the wall of the circuit breaker compartment has a first edge parallel to a second edge, and wherein the longitudinal axes of the three electrical links are parallel to the first edge and second edge.

18. Circuit breaker apparatus according to claim 17, wherein a distance between the first edge and the longitudinal axis of an electrical link (300) adjacent to the first edge is greater than a distance between the second edge and the longitudinal axis of an electrical link (300) adjacent to the second edge.

19. Circuit breaker apparatus according to claim 15, wherein the longitudinal axis of each electrical link (300) and the centre axis of the corresponding cable connection box (240) to which the electrical link is connected share the same axis.

20. Circuit breaker apparatus according to claim 14 when dependent upon claim 13, wherein the longitudinal axis of each electrical link (320) is at an angle to the centre axis of the cable connection box (200, 240) to which it is connected.

21. Circuit breaker apparatus according to claim 20, wherein the centre axis of each cable connection box (200, 240) lies in the plane parallel to the wall of the circuit breaker compartment, and wherein the longitudinal axis of each electrical link (320) is angled in the same direction the centre axis of each cable connection box to which it is attached.

22. Circuit breaker apparatus according to claim 21, wherein the wall of the circuit breaker compartment has a first edge parallel to a second edge, and wherein the centre axes of the three cable connection boxes are parallel to the first edge and second edge.

23. Circuit breaker apparatus according to claim 22, wherein a distance between the first edge and the centre axis of a cable connection box (200, 240) adjacent to the first edge is equal to a distance between the second edge and the centre axis of a cable connection box (200, 240) adjacent to the second edge.

24. Circuit breaker apparatus according to any of claims 12-23, wherein each of the cable connection boxes comprises four or more cable connection sockets (210) in a zig zag arrangement.

## Patentansprüche

1. Anschlusseinrichtung und Leistungsschalterraum für einen Leistungsschalter einer Mittelspannungsschaltanlage, wobei die Anschlusseinrichtung Folgendes umfasst:
- eine elektrische Verbindung (300, 320) für eine Phase der Mittelspannungsschaltanlage; und
- einen Kabelanschlusskasten (200, 240) für die Phase der Mittelspannungsschaltanlage;
wobei die elektrische Verbindung dazu ausgelegt ist, an den Leistungsschalterraum (100) angeschlossen zu werden;
wobei der Kabelanschlusskasten dazu ausgelegt ist, an die elektrische Verbindung angeschlossen zu werden;
wobei der Kabelanschlusskasten drei oder mehr Kabelanschlussbuchsen (210) für die Phase der Mittelspannungsschaltanlage in einer Zick-Zack-Anordnung umfasst;
wobei die elektrische Verbindung und der Kabelanschlusskasten derart ausgelegt sind, dass, wenn die elektrische Verbindung an den Leistungsschalterraum angeschlossen ist und der Kabelanschlusskasten an die elektrische Verbindung angeschlossen ist, eine Rückwand (201, 241) des Kabelanschlusskastens einer Wand (110) des Leistungsschalterraums zugewandt ist und die drei oder mehr Kabelanschlussbuchsen von der Wand des Leistungsschalterraums abgewandt sind; und
wobei eine Kabelanschlussbuchse der drei oder mehr Kabelanschlussbuchsen (210), die an die elektrische Verbindung (300, 320) angrenzt, wenn der Kabelanschlusskasten (200, 240) an die elektrische Verbindung angeschlossen ist, eine laterale Öffnung aufweist, und wobei der Kabelanschlusskasten dazu ausgelegt ist, an die elektrische Verbindung über eine Schraube (280) angeschlossen zu werden, die sich durch die laterale Öffnung erstreckt.

2. Anschlusseinrichtung und Leistungsschalterraum nach Anspruch 1, wobei die elektrische Verbindung (300, 320) derart ausgelegt ist, dass, wenn die elektrische Verbindung an den Leistungsschalterraum (100) angeschlossen ist, ein Abschnitt der elektrischen Verbindung eine Längsachse aufweist, die in einer Ebene parallel zu der Wand des Leistungsschalterraums liegt.

3. Anschlusseinrichtung und Leistungsschalterraum nach einem der Ansprüche 1-2, wobei der Kabelanschlusskasten (200, 240) eine Mittelachse parallel zu der Rückwand des Kabelanschlusskastens aufweist, und wobei Mitten von aufeinanderfolgenden Kabelanschlussbuchsen (210) auf jeder Seite der Mittelachse des Kabelanschlusskastens liegen.

4. Anschlusseinrichtung und Leistungsschalterraum nach Anspruch 3, wenn abhängig von Anspruch 2, wobei die elektrische Verbindung (300) und der Kabelanschlusskasten (200, 240) derart ausgelegt sind, dass, wenn die elektrische Verbindung an den Leistungsschalterraum angeschlossen ist und der Kabelanschlusskasten an die elektrische Verbindung angeschlossen ist, die Längsachse der elektrischen Verbindung parallel zu der Mittelachse des Kabelanschlusskastens ist.

5. Anschlusseinrichtung und Leistungsschalterraum nach Anspruch 4, wobei die Mittelachse des Kabelanschlusskastens (240) in der Ebene parallel zu der Wand des Leistungsschalterraums liegt, zu einer Seite der Längsachse der elektrischen Verbindung (300) versetzt.

6. Anschlusseinrichtung und Leistungsschalterraum nach Anspruch 4, wobei die Längsachse der elektrischen Verbindung (300) und die Mittelachse des Kabelanschlusskastens (240) dieselbe gemeinsame Achse aufweisen.

7. Anschlusseinrichtung und Leistungsschalterraum nach Anspruch 3, wenn abhängig von Anspruch 2, wobei die elektrische Verbindung (320) und der Kabelanschlusskasten (200, 240) derart ausgelegt sind, dass, wenn die elektrische Verbindung an den Leistungsschalterraum angeschlossen ist und der Kabelanschlusskasten an die elektrische Verbindung angeschlossen ist, die Längsachse der elektrischen Verbindung in einem Winkel zu der Mittelachse des Kabelanschlusskastens ist.

8. Anschlusseinrichtung und Leistungsschalterraum nach einem der Ansprüche 3-7, wobei der Kabelanschlusskasten eine Sammelschiene (205) umfasst, die an die drei oder mehr Kabelanschlussbuchsen (210) angeschlossen ist, und wobei zwei Seiten der Sammelschiene parallel zu der Mittelachse des Kabelanschlusskastens (200, 240) sind.

9. Anschlusseinrichtung und Leistungsschalterraum nach einem der Ansprüche 3-7, wobei der Kabelanschlusskasten eine Sammelschiene (245) umfasst, die an die drei oder mehr Kabelanschlussbuchsen (210) angeschlossen ist, und wobei zwei Seiten der Sammelschiene im Wesentlichen parallel zueinander sind und der Zick-Zack-Anordnung der Kabelanschlussbuchsen folgen.

10. Anschlusseinrichtung und Leistungsschalterraum nach Anspruch 1, wobei die laterale Öffnung aus einem Sicherungsring (270) mit einem Außenlinksgewinde (278) an seiner Außenfläche ausgebildet ist, das zu einem Innenlinksgewinde (268) einer röhrenförmigen Verlängerung (260) der Kabelanschlussbuchse (210) passt.

11. Anschlusseinrichtung und Leistungsschalterraum nach einem der Ansprüche 1-10, wobei der Kabelanschlusskasten vier oder mehr Kabelanschlussbuchsen (210) in einer Zick-Zack-Anordnung umfasst.

12. Leistungsschaltereinrichtung für eine Mittelspannungsschaltanlage, wobei die Leistungsschaltereinrichtung Folgendes umfasst:
- einen Leistungsschalterraum (100);
- drei elektrische Verbindungen (300, 320) jeweils für unterschiedliche Phasen der Mittelspannungsschaltanlage; und
- drei Kabelanschlusskästen (200, 240) jeweils für die unterschiedlichen Phasen der Mittelspannungsschaltanlage;
wobei jede elektrische Verbindung an den Leistungsschalterraum (100) angeschlossen ist;
wobei jeder Kabelanschlusskasten an eine jeweilige elektrische Verbindung angeschlossen ist;
wobei jeder Kabelanschlusskasten drei oder mehr Kabelanschlussbuchsen (210) jeweils für die unterschiedlichen Phasen der Mittelspannungsschaltanlage in einer Zick-Zack-Anordnung umfasst;
wobei eine Rückwand jedes Kabelanschlusskastens einer Wand des Leistungsschalterraums zugewandt ist und die drei oder mehr Kabelanschlussbuchsen jedes Kabelanschlusskastens von der Wand des Leistungsschalterraums abgewandt sind; und
wobei eine Kabelanschlussbuchse der drei oder mehr Kabelanschlussbuchsen (210), die an die elektrische Verbindung (300, 320) angrenzt, wenn der Kabelanschlusskasten (200, 240) an die elektrische Verbindung angeschlossen ist, eine laterale Öffnung aufweist, und wobei der Kabelanschlusskasten dazu ausgelegt ist, an die elektrische Verbindung über eine Schraube (280) angeschlossen zu werden, die sich durch die laterale Öffnung erstreckt.

13. Leistungsschaltereinrichtung nach Anspruch 12, wobei ein Abschnitt jeder elektrischen Verbindung eine Längsachse aufweist, die in einer Ebene parallel zu der Wand des Leistungsschalterraums liegt, und wobei die Längsachsen der drei elektrischen Verbindungen parallel zueinander sind.

14. Leistungsschaltereinrichtung nach Anspruch einem der Ansprüche 12-13, wobei jeder Kabelanschlusskasten (200, 240) eine Mittelachse parallel zu der Wand des Kabelanschlusskastens aufweist, und wobei Mitten von aufeinanderfolgenden Kabelanschlussbuchsen (210) auf jeder Seite der Mittelachse des Kabelanschlusskastens liegen, und wobei die Mittelachsen der drei Kabelanschlusskästen parallel zueinander sind.

15. Leistungsschaltereinrichtung nach Anspruch 14, wenn abhängig von Anspruch 13, wobei die Längsachse jeder elektrischen Verbindung parallel zu der Mittelachse des Kabelanschlusskastens ist, an den sie angeschlossen ist.

16. Leistungsschaltereinrichtung nach Anspruch 15, wobei die Mittelachse jedes Kabelanschlusskastens (240) in der Ebene parallel zu der Wand des Leistungsschalterraums liegt, und wobei die Längsachse jeder elektrischen Verbindung (300) zu einer selben Seite der Mittelachse jedes Kabelanschlusskastens versetzt ist, an den sie angebracht ist.

17. Leistungsschaltereinrichtung nach Anspruch 16, wobei die Wand des Leistungsschalterraums eine erste Kante parallel zu einer zweiten Kante aufweist, und wobei die Längsachsen der drei elektrischen Verbindungen parallel zu der ersten Kante und zweiten Kante sind.

18. Leistungsschaltereinrichtung nach Anspruch 17, wobei ein Abstand zwischen der ersten Kante und der Längsachse einer elektrischen Verbindung (300), die an die erste Kante angrenzt, größer als ein Abstand zwischen der zweiten Kante und der Längsachse einer elektrischen Verbindung (300) ist, die an die zweite Kante angrenzt.

19. Leistungsschaltereinrichtung nach Anspruch 15, wobei die Längsachse jeder elektrischen Verbindung (300) und die Mittelachse des entsprechenden Kabelanschlusskastens (240), an den die elektrische Verbindung angeschlossen ist, dieselbe gemeinsame Achse aufweisen.

20. Leistungsschaltereinrichtung nach Anspruch 14, wenn abhängig von Anspruch 13, wobei die Längsachse jeder elektrischen Verbindung (320) in einem Winkel zu der Mittelachse des Kabelanschlusskastens (200, 240) ist, an den sie angeschlossen ist.

21. Leistungsschaltereinrichtung nach Anspruch 20, wobei die Mittelachse jedes Kabelanschlusskastens (200, 240) in der Ebene parallel zu der Wand des Leistungsschalterraums liegt, und wobei die Längsachse jeder elektrischen Verbindung (320) in derselben Richtung der Mittelachse jedes Kabelanschlusskastens abgewinkelt ist, an den sie angebracht ist.

22. Leistungsschaltereinrichtung nach Anspruch 21, wobei die Wand des Leistungsschalterraums eine erste Kante parallel zu einer zweiten Kante aufweist, und wobei die Mittelachsen der drei Kabelanschlusskästen parallel zu der ersten Kante und zweiten Kante sind.

23. Leistungsschaltereinrichtung nach Anspruch 22, wobei ein Abstand zwischen der ersten Kante und der Mittelachse eines Kabelanschlusskastens (200, 240), der an die erste Kante angrenzt, gleich einem Abstand zwischen der zweiten Kante und der Mittelachse eines Kabelanschlusskastens (200, 240) ist, der an die zweite Kante angrenzt.

24. Leistungsschaltereinrichtung nach einem der Ansprüche 12-23, wobei jeder der Kabelanschlusskästen vier oder mehr Kabelanschlussbuchsen (210) in einer Zick-Zack-Anordnung umfasst.

## Revendications

1. Appareil de connexion et compartiment de disjoncteur pour disjoncteur d'un appareillage de commutation moyenne tension, l'appareil de connexion comprenant :
- une liaison électrique (300, 320) pour une phase de l'appareillage de commutation moyenne tension ; et
- une boîte de connexion de câble (200, 240) pour la phase de l'appareillage de commutation moyenne tension ;
la liaison électrique étant configurée pour se connecter au compartiment de disjoncteur (100) ;
la boîte de connexion de câble étant configurée pour se connecter à la liaison électrique ;
la boîte de connexion de câble comprenant trois ou plus de trois prises de connexion de câble (210) pour la phase de l'appareillage de commutation moyenne tension dans un agencement en zigzag ;
la liaison électrique et la boîte de connexion de câble étant configurées de telle sorte que lorsque la liaison électrique est connectée au compartiment de disjoncteur et que la boîte de connexion de câble est connectée à la liaison électrique, une paroi arrière (201, 241) de la boîte de connexion de câble fait face à une paroi (110) du compartiment de disjoncteur et les trois ou plus de trois prises de connexion de câble étant orientées à l'opposé de la paroi du compartiment de disjoncteur ; et
une prise de connexion de câble des trois ou plus de trois prises de connexion de câble (210) qui est adjacente à la liaison électrique (300, 320) lorsque la boîte de connexion de câble (200, 240) est connectée à la liaison électrique ayant un trou latéral, et la boîte de connexion de câble étant configurée pour être connectée à la liaison électrique par l'intermédiaire d'une vis (280) s'étendant à travers le trou latéral.

2. Appareil de connexion et compartiment de disjoncteur selon la revendication 1, la liaison électrique (300, 320) étant configurée de telle sorte que lorsque la liaison électrique est connectée au compartiment de disjoncteur (100), une section de la liaison électrique a un axe longitudinal qui se trouve dans un plan parallèle à la paroi du compartiment de disjoncteur.

3. Appareil de connexion et compartiment de disjoncteur selon l'une quelconque des revendications 1 à 2, la boîte de connexion de câble (200, 240) ayant un axe central parallèle à la paroi arrière de la boîte de connexion de câble, et les centres des prises de connexion de câble consécutives (210) se trouvant de part et d'autre de l'axe central de la boîte de connexion de câble.

4. Appareil de connexion et compartiment de disjoncteur selon la revendication 3 lorsqu'elle dépend de la revendication 2, la liaison électrique (300) et la boîte de connexion de câble (200, 240) étant configurées de telle sorte que lorsque la liaison électrique est connectée au compartiment de disjoncteur et que la boîte de connexion de câble est connectée à la liaison électrique, l'axe longitudinal de la liaison électrique est parallèle à l'axe central de la boîte de connexion de câble.

5. Appareil de connexion et compartiment de disjoncteur selon la revendication 4, l'axe central de la boîte de connexion de câble (240) se trouvant dans le plan parallèle à la paroi du compartiment de disjoncteur décalé d'un côté de l'axe longitudinal de la liaison électrique (300).

6. Appareil de connexion et compartiment de disjoncteur selon la revendication 4, l'axe longitudinal de la liaison électrique (300) et l'axe central de la boîte de connexion de câbles (240) partageant le même axe.

7. Appareil de connexion et compartiment de disjoncteur selon la revendication 3 lorsqu'elle dépend de la revendication 2, la liaison électrique (320) et la boîte de connexion de câble (200, 240) étant configurées de telle sorte que lorsque la liaison électrique est connectée au compartiment de disjoncteur et que la boîte de connexion de câble est connectée à la liaison électrique, l'axe longitudinal de la liaison électrique fait un angle avec l'axe central de la boîte de connexion de câble.

8. Appareil de connexion et compartiment de disjoncteur selon l'une quelconque des revendications 3 à 7, la boîte de connexion de câble comprenant une barre omnibus (205) connectée aux trois ou plus de trois prises de connexion de câble (210), et deux côtés de la barre omnibus étant parallèles à l'axe central de la boîte de connexion de câble (200, 240).

9. Appareil de connexion et compartiment de disjoncteur selon l'une quelconque des revendications 3 à 7, la boîte de connexion de câble comprenant une barre omnibus (245) connectée aux trois ou plus de trois prises de connexion de câble (210), et deux côtés de la barre omnibus étant sensiblement parallèles l'un à l'autre et suivant l'agencement en zigzag des prises de connexion de câble.

10. Appareil de connexion et compartiment de disjoncteur selon la revendication 1, le trou latéral étant formé à partir d'une bague de verrouillage (270) avec un filetage mâle gauche (278) sur sa surface extérieure qui correspond à un filetage femelle gauche (268) de l'extension en forme de tube (260) de la prise de connexion de câble (210).

11. Appareil de connexion et compartiment de disjoncteur selon l'une quelconque des revendications 1 à 10, la boîte de connexion de câble comprenant quatre ou plus de quatre prises de connexion de câble (210) dans un agencement en zigzag.

12. Appareil disjoncteur pour un appareillage de commutation moyenne tension, l'appareil disjoncteur comprenant :
- un compartiment de disjoncteur (100) ;
- trois liaisons électriques (300, 320), chacune pour différentes phases de l'appareillage de commutation moyenne tension ; et
- trois boîtes de connexion de câbles (200, 240), chacune pour les différentes phases de l'appareillage de commutation moyenne tension ;
chaque liaison électrique étant connectée au compartiment de disjoncteur (100) ;
chaque boîte de connexion de câble étant connectée à une liaison électrique respective ;
chaque boîte de connexion de câble comprenant trois ou plus de trois prises de connexion de câble (210), chacune pour les différentes phases de l'appareillage de commutation moyenne tension dans un agencement en zigzag ;
une paroi arrière de chaque boîte de connexion de câble faisant face à une paroi du compartiment de disjoncteur et les trois ou plus de trois prises de connexion de câble de chaque boîte de connexion de câble étant orientées à l'opposé de la paroi du compartiment de disjoncteur ; et
une prise de connexion de câble des trois ou plus de trois prises de connexion de câble (210) qui est adjacente à la liaison électrique (300, 320) lorsque la boîte de connexion de câble (200, 240) est connectée à la liaison électrique ayant un trou latéral, et la boîte de connexion de câble étant configurée pour être connectée à la liaison électrique par l'intermédiaire d'une vis (280) s'étendant à travers le trou latéral.

13. Appareil disjoncteur selon la revendication 12, une section de chaque liaison électrique ayant un axe longitudinal qui se trouve dans un plan parallèle à la paroi du compartiment de disjoncteur, et les axes longitudinaux des trois liaisons électriques étant parallèles les uns aux autres.

14. Appareil disjoncteur selon l'une quelconque des revendications 12 à 13, chaque boîte de connexion de câble (200, 240) ayant un axe central parallèle à la paroi de la boîte de connexion de câble, et des centres des prises de connexion de câble consécutives (210) se trouvant de part et d'autre de l'axe central de la boîte de connexion de câble, et les axes centraux des trois boîtes de connexion de câble étant parallèles les uns aux autres.

15. Appareil disjoncteur selon la revendication 14 lorsqu'elle dépend de la revendication 13, l'axe longitudinal de chaque liaison électrique étant parallèle à l'axe central de la boîte de connexion de câble auquel il est connecté.

16. Appareil disjoncteur selon la revendication 15, l'axe central de chaque boîte de connexion de câble (240) se trouvant dans le plan parallèle à la paroi du compartiment de disjoncteur, et l'axe longitudinal de chaque liaison électrique (300) étant décalé d'un même côté de l'axe central de chaque boîte de connexion de câble à laquelle il est attaché.

17. Appareil disjoncteur selon la revendication 16, la paroi du compartiment de disjoncteur ayant un premier bord parallèle à un second bord, et les axes longitudinaux des trois liaisons électriques étant parallèles au premier bord et au second bord.

18. Appareil disjoncteur selon la revendication 17, une distance entre le premier bord et l'axe longitudinal d'une liaison électrique (300) adjacente au premier bord étant supérieure à une distance entre le second bord et l'axe longitudinal d'une liaison électrique (300) adjacente au second bord.

19. Appareil disjoncteur selon la revendication 15, l'axe longitudinal de chaque liaison électrique (300) et l'axe central de la boîte de connexion de câble correspondant (240) auquel la liaison électrique est connectée partageant le même axe.

20. Appareil disjoncteur selon la revendication 14 lorsqu'elle dépend de la revendication 13, l'axe longitudinal de chaque liaison électrique (320) faisant un angle avec l'axe central de la boîte de connexion de câble (200, 240) auquel il est connecté.

21. Appareil disjoncteur selon la revendication 20, l'axe central de chaque boîte de connexion de câble (200, 240) se trouvant dans le plan parallèle à la paroi du compartiment de disjoncteur, et l'axe longitudinal de chaque liaison électrique (320) étant à un angle dans la même direction que l'axe central de chaque boîte de connexion de câble à laquelle il est attaché.

22. Appareil disjoncteur selon la revendication 21, la paroi du compartiment de disjoncteur ayant un premier bord parallèle à un second bord, et les axes centraux des trois boîtes de connexion de câble étant parallèles au premier bord et au second bord.

23. Appareil disjoncteur selon la revendication 22, une distance entre le premier bord et l'axe central d'une boîte de connexion de câble (200, 240) adjacente au premier bord étant égale à une distance entre le second bord et l'axe central d'une boîte de connexion de câble (200, 240) adjacente au second bord.

24. Appareil disjoncteur selon l'une quelconque des revendications 12 à 23, chacune des boîtes de connexion de câble comprenant quatre ou plus de quatre prises de connexion de câble (210) dans un agencement en zigzag.
